# EUROPÄISCHE PATENTANMELDUNG

(11) **EP 3 905 383 A1**
(43) Veröffentlichungstag der Anmeldung: **03.11.2021**
(21) Anmeldenummer: 20172372.3
(22) Anmeldetag: 30.04.2020
(51) Int. Cl.: H01M 2/40, H01M 12/06

(54) **METALL-LUFT-BRENNSTOFFZELLE**

(71) Anmelder: LINDIG GmbH, 99820 Hörselberg-Hainich (DE)
(72) Erfinder: Montag, Dominik, 99817 Eisenach (DE)
(74) Vertreter: Freischem & Partner Patentanwälte mbB

(57) **Zusammenfassung**

Die Erfindung betrifft eine Metall-Luft-Brennstoffzelle, ein Verfahren zum Erzeugen von elektrischem Strom mit dieser Metall-Luft-Brennstoffzelle, sowie eine Toilette.

Besonderer Vorteil ist die automatisch-hydraulische Abtransportvorrichtung des mit Metalloxid bzw. Metallhydroxid beeinträchtigten Elektrolyten.

## Beschreibung

Die Erfindung betrifft eine Metall-Luft-Brennstoffzelle, ein Verfahren zum Erzeugen von elektrischem Strom mit dieser Metall-Luft-Brennstoffzelle, sowie eine Toilette.

In Metall-Luft-Brennstoffzellen bzw. Primärzellen von Metall-Luft-Batterien werden an einer Anode aus Metall in einem Elektrolyt Metallionen gelöst, die an einer Kathode mit dem Sauerstoff aus der Luft zu Metalloxid bzw. Metallhydroxid reagieren.

Metall-Luft-Brennstoffzellen bzw. Metall-Luft-Batterien haben bisher das Problem, dass sie prozessbedingt keine sehr lange Betriebsdauer aufweisen, da sich die Kathode mit fortschreitender Nutzungsdauer mit quellendem Metallhydroxid bzw. Metalloxid zusetzt und daher die Effizienz der Ladungsübertragung bzw. die Ionenbeweglichkeit abnimmt. Der Widerstand des Elektrolyten steigt, bzw. die Leitfähigkeit sinkt, wodurch der Stromfluss gehemmt wird.

US20180183121A1 beschreibt eine wiederaufladbare Metall-Luft-Brennstoffzelle.

JP2014099377A beschreibt eine Magnesium-Luft-Brennstoffzelle mit Wasser aus heißen Quellen und andere praktische Elektrolyte. Der Elektrolyt muss aktiv getauscht werden.

CN106315993A beschreibt ein Wasseraufreinigungsverfahren mit vorgeschalteter Fällung und anschließender biologischer Nachbehandlung. Es wird kein Strom erzeugt.

JP2016213138A beschreibt eine Magnesium-Luft-Brennstoffzelle, bei der die Anode in horizontaler Richtung kontinuierlich nachgeführt wird.

US20170018784A1 beschreibt eine papierbasierte Magnesiumbatterie. Die Elektroden sind durch Papier separiert. Energie wird aus dem Elektrolyten und nicht von Elektroden gewonnen.

CN202183440U beschreibt eine Batterie, die das Potential zwischen Kupfer und Magnesium nutzt. Der Elektrolyt ist Urin. Es handelt sich um eine galvanische Zelle.

TW201628253A und TWM502968U beschreiben die Stromerzeugung mit Urin oder organischen Säuren als Elektrolyt. Das finale Oxidationsmittel ist Wasserstoffperoxid. Die Elektroden sind aus Metall.

CN1806736A beschreibt eine umweltfreundliche Toilette. Die Stromerzeugung erfolgt mit einer mikrobiellen Brennstoffzelle über eine Protonenaustauschmembran.

CN109301299A beschreibt eine bio-elektrochemische Stromerzeugung (mikrobiellen Brennstoffzelle).

CN203160380U beschreibt die Stromerzeugung in öffentlichen Toiletten über Elektrolyse. Der Elektrolyt muss der Zelle über ein Ventil zugeführt werden.

CN209056555U beschreibt ein System basierend auf dem Prinzip der mikrobiellen Brennstoffzelle.

Die Aufgabe der vorliegenden Erfindung ist es daher, die Betriebsdauer einer Metall-Luft-Brennstoffzelle bzw. Metall-Luft-Batterie zu erhöhen. Eine weitere Aufgabe kann auch sein, dass Automatisierungsgrad, Effizienz oder Stabilität des Prozesses der Stromgewinnung erhöht werden.

Die der Erfindung zu Grunde liegende Aufgabe wird in einer ersten Ausführungsform durch eine Metall-Luft-Brennstoffzelle umfassend wenigstens eine Anode und wenigstens eine Kathode gelöst, die jeweils mit Elektrolyt kontaktierbar sind, wobei in einem Elektrolytbehälter eine Abtransportvorrichtung für die entstehende Metalloxid- bzw. Metallhydroxid-Elektrolyt-Mischung angeordnet ist.

Dadurch ist es erstmals möglich, eine Metall-Luft-Brennstoffzelle über einen längeren Zeitraum mit gleichbleibender Effizienz zu betreiben. Zudem kann so eine autarke, wartungsfreie Stromversorgung einer sanitären Einrichtung wie einer Toilette oder eines Pissoirs mit geringem elektrischem Verbrauch für viele Tage sichergestellt werden.

Die praktische Energiedichte der Brennstoffzelle liegt vorzugsweise in einem Bereich von 4 bis 8 kWh/kg. Die primäre Spannung der Brennstoffzelle liegt vorzugsweise in einem Bereich von 2 bis 4 Volt.

### Anode

Die Anode enthält vorzugsweise wenigstens 80%, besonders bevorzugt wenigstens 90%, ganz besonders bevorzugt vollständig, wenigstens ein Metall. Das Metall kann ausgewählt sein aus der Gruppe der Alkali-, Erdalkali-, Übergangs- oder Halbmetalle, ganz besonders bevorzugt ausgewählt sein aus der Gruppe der Elemente Lithium, Natrium, Kalium, Aluminium, Magnesium, Blei, Kupfer, Zink, Zinn, Eisen oder Mangan oder Kombinationen derselben. Vorzugsweise ist das Metall der Anode Magnesium oder Aluminium. Diese Metalle sorgen für eine relativ hohe Spannung und sind nachhaltiger und perspektivisch verfügbarer als beispielsweise Lithium. Zudem werden Magnesiumelektroden bereits industriell als Opferanoden für Heizungssysteme hergestellt.

Kalium und Natrium sind eher nachteilig, da sie sehr heftig exotherm mit wässrigen Elektrolyten reagieren.

Die Anode ist vorzugsweise stabförmig. Die Anode hat vorzugsweise eine Länge in einem Bereich von 5 bis 100 cm, ganz besonders bevorzugt eine Länge in einem Bereich von 10 bis 50 cm. Vorzugsweise ist die Anode rund. Die Anode weist vorzugsweise einen Durchmesser in einem Bereich von 0,5 bis 30 cm, ganz besonders bevorzugt in einem Bereich von 1 bis 10 cm auf.

Die Anode umfasst vorzugsweise 30 bis 1000 g Metall. Durch diese bevorzugten Dimensionen kann die Anode besonders leicht auswechselbar an oder in dem Elektrolytbehälter angeordnet werden und verfügt über eine angemessene Standzeit.

Die Anode ist vorzugsweise in einer Öffnung des Elektrolytbehälters, besonders bevorzugt mit einem Verschluss, noch mehr bevorzugt mit einem Bajonettverschluss, befestigt. Die Anode ist vorzugsweise entfernbar. Die Anode ragt von dieser Öffnung aus vorzugsweise in den Elektrolytbehälter hinein. So kann sie vom Elektrolyten möglichst vollständig benetzt werden. Vorzugsweise ist die Anode auswechselbar. Vorzugsweise ist die Anode im Bereich der Öffnung des Elektrolytbehälters, ganz besonders bevorzugt mit dem Verschluss elektrisch kontaktiert. Vorzugsweise ist die Anode so in dem Elektrolytbehälter angeordnet, dass die Öffnung des Elektrolytbehälters für die Anode oberhalb des Elektrolytspiegels liegt. Vorzugsweise ist die Anode so in dem Elektrolytbehälter angeordnet, dass die Anode überwiegend in den Elektrolyten eintauchen kann.

Vorzugsweise hat die Anode eine Seele aus einem abweichenden Metall, vorzugsweise aus einem edleren Metall. Dadurch kann sichergestellt werden, dass die Anode gleichmäßiger und vollständiger verbraucht wird. Die Seele kann beispielsweise aus Stahl oder Eisen sein.

### Kathode

Vorzugsweise umfasst die Kathode eine wasserundurchlässige und luftdurchlässige Membrane. Durch die Wasserundurchlässigkeit kann beispielsweise verhindert werden, dass der Elektrolyt wie beispielsweise Urin durch die Membrane austreten kann. Durch die Luftdurchlässigkeit kann sichergestellt werden, dass die Membrane ausreichend Sauerstoff aus der Luft durchlässt, damit dieser mit den Metallionen aus dem Elektrolyten zu Metalloxid bzw. Metallhydroxid reagieren kann. Die Membrane ist vorzugsweise für Protonen undurchlässig und/oder unpolar. Die Membrane ist vorzugsweise eine Teflon-Membrane. Die Membrane hat vorzugsweise eine Fläche in einem Bereich von 10 bis 2000 cm², besonders bevorzugt in einem Bereich von 10 bis 200 cm².

Die Kathode umfasst vorzugsweise auch eine Graphitschicht. Diese Graphitschicht ist vorzugweise porös und mit dem Elektrolyten kontaktierbar. So kann sich die Graphitschicht mit Elektrolyt vollsaugen. Ein Kollektorgitter im Inneren der "Graphitmatte" sorgt beispielsweise für einen gleichmäßigen Abtransport der Ladungen. Die Kathode bzw. das Kollektorgitter ist vorzugsweise elektrisch kontaktiert. Zusammen mit dem Kontakt der Anode ergibt sich so die Stromquelle. Die Graphitschicht ist vorzugsweise mit Manganoxid als Katalysator dotiert.

### Elektrolyt

Vorzugsweise ist der Elektrolyt flüssig. Dadurch kann das entstehende Metalloxid bzw. Metallhydroxid besonders leicht abtransportiert werden.

Der Elektrolyt ist vorzugsweise wässrig, ganz besonders bevorzugt Urin. Die erfindungsgemäße Brennstoffzelle kann so einfach als Stromerzeugung einer mobilen Toilette dienen. Dadurch, dass durch die Benutzung der Toilette immer frischer Elektrolyt in den Elektrolytbehälter zugeführt wird, kann das entstehende Metalloxid bzw. Metallhydroxid besonders leicht abtransportiert werden.

Vorzugsweise ist in der oberen Hälfte des Elektrolytbehälters ein Zulauf für Elektrolyt angeordnet. Vorzugsweise ist dieser Zulauf oberhalb des Elektrolytspiegels und insbesondere möglichst weit entfernt vom Ansaugbereich des Auslasses (Ablauf) im Elektrolytbehälter angeordnet. Durch Zulauf bzw. Ablauf kann der Elektrolyt automatisch gewechselt bzw. ständig erneuert und muss nicht aktiv getauscht werden.

Der Elektrolytbehälter hat vorzugsweise einen Auslass bzw. Ablauf. Dieser Auslass hat seine Öffnung im Elektrolytbehälter vorzugsweise in der unteren Hälfte des Elektrolytbehälters, besonders bevorzugt knapp über dem Boden des Behälters.

Vorzugsweise ist in der der unteren Hälfte des Elektrolytbehälters ein Zulauf eines Ablaufs für Elektrolyt angeordnet, der besonders bevorzugt die Abtransportvorrichtung oder Teil davon ist.

Der Elektrolytbehälter hat vorzugsweise auch einen zweiten Auslass für den Elektrolyt als Überlauf. Vorzugsweise hat der zweite Auslass seine Öffnung in der oberen Hälfte des Elektrolytbehälters. Dieser zweite Auslass kann vorzugsweise mit dem ersten Auslass, beispielsweise über eine Röhre und insbesondere zum obersten Punkt des Bogens der Röhre, verbunden sein.

Der Auslass ist beispielsweise nach dem technischen Prinzip der korrespondierenden Röhren konzipiert. Damit der Elektrolyt-Tank beim Überlauf nicht komplett entleert wird, ist der oberste Punkt des Bogens vorzugsweise belüftet. Die Belüftung kann vorzugsweise mit einem Notüberlauf kombiniert werden.

Das Material des Elektrolytbehälters ist vorzugsweise Kunststoff, ganz besonders bevorzugt ein Kunststoff aus biogenen und in der Umwelt leicht abbaubaren Rohstoffen, wie beispielsweise Polymilchsäure.

### Abtransportvorrichtung

Vorzugsweise ist die Abtransportvorrichtung (18) ein Rohr mit einem Zulauf und einem Ablauf, dessen eines Ende (20) als Zulauf 0,1 bis 10 cm oberhalb des Bodens (22) des Elektrolytbehälters (16) endet, insbesondere das Innenvolumen des im Inneren des Elektrolytbehälters befindlichen Teils des Rohrs (18) (Steigrohrvolumen) in einem Bereich von 10 bis 100 ml liegt.

Vorzugsweise ist die Abtransportvorrichtung ein Rohr. Dadurch kann die Abtransportvorrichtung der (erste) Auslass des Elektrolytbehälters sein. Vorzugsweise endet dessen eines Ende als Zulauf 0,01 bis 10 cm oberhalb des Bodens des Elektrolytbehälters. Insbesondere kann das Innenvolumen des Rohrs in einem Bereich von 10 bis 100 ml liegen. Durch dieses Volumen ist es möglich, dass durch das Rohr - beispielsweise wenn es als korrespondierende Röhre gestaltet ist - beim Wasserlassen des Toilettenbenutzers auch bei geringeren Mengen, wie beispielsweise nur 100 ml Entleerung der Blase, Flüssigkeit abtransportiert wird und so auch das entstandene Metalloxid bzw. Metallhydroxid aus dem Elektrolytbehälter ausreichend ausgetragen werden kann. Die Brennstoffzelle spült sich so automatisch.

Vorzugsweise befindet sich das andere offene Ende des Rohrs zum einen außerhalb oder in der Wand des Elektrolytbehälters und zum anderen unterhalb des höchsten Punktes des Rohrs. Dadurch kann bei Zugabe von Elektrolyt in den Elektrolytbehälter durch das Prinzip der korrespondierenden Röhren der Elektrolyt durch das Rohr aus dem Elektrolytbehälter austreten und so das entstandene und eventuell sedimentierte Metalloxid bzw. Metallhydroxid aus dem Elektrolytbehälter ausgetragen werden.

### Weitere Ausführungsformen

In einer weiteren Ausführungsform wird die der Erfindung zu Grunde liegende Aufgabe durch ein Verfahren zur Gewinnung von elektrischem Strom mit der erfindungsgemäßen Metall-Luft-Brennstoffzelle gelöst, dadurch gekennzeichnet, dass
a. Elektrolyt kontinuierlich oder wiederholt mit Pausen in den Elektrolytbehälter durch den Zulauf eingefüllt wird, und
b. das entstehende Metalloxid bzw. Metallhydroxid kontinuierlich oder wiederholt mit Pausen abtransportiert wird.

Dabei liegt die Temperatur vorzugsweise in einem Bereich von 0°C bis 40°C. Liegt die Temperatur unterhalb dieses Bereiches, ist die Brennstoffzelle nicht mehr sehr effizient.

Das Metall der Anode wird in dem Verfahren verbraucht und ist der Brennstoff der Brennstoffzelle. Daher ist es auch besonders bevorzugt, wenn die Anode nach überwiegendem oder höherem Verbrauch des Anodenmetalls ausgetauscht wird. Vorzugsweise wird nach einem Austausch der Anode künstlicher Elektrolyt wie beispielsweise Salzwasser in den Elektrolytbehälter gefüllt (Erstbefüllung).

Vorzugsweise wird in Schritt a. der Elektrolyt durch Benutzung einer Toilette oder eines Pissoirs in Form von Urin zugeführt. Durch diesen regelmäßigen Zufluss von Elektrolyt kann wiederum das Metalloxid bzw. Metallhydroxid regelmäßig ausgespült und damit abtransportiert werden.

Vorzugsweise wird der durch die Brennstoffzelle erzeugte Strom genutzt, um in einer Toilette Licht und/oder Lüftung zu betreiben.

Vorzugsweise wird das Verfahren so durchgeführt, dass eine elektronische Schaltung so konzipiert ist, dass das Licht bei der Verriegelung der Tür eingeschaltet und besonders bevorzugt die Lüftung ausgeschaltet wird. Bei offener (und beispielsweise unverriegelter) Tür werden vorzugsweise die elektrischen Verbraucher umgekehrt betrieben (beispielsweise kein Licht, dafür Lüftung). Eine Nachlauffunktion kann vorzugsweise den Lüfter nach einer angemessenen Zeit stoppen und so unnötigen Strom und den entsprechenden Anodenverbrauch verringern.

Vorzugsweise wird das Verfahren zur Stromversorgung einer mobilen oder stationären Toiletteneinrichtung eingesetzt.

In einer weiteren Ausführungsform wird die der Erfindung zu Grunde liegende Aufgabe durch eine Toilette, insbesondere mobile Toilette, mobile oder stationäre Toiletteneinrichtung gelöst, umfassend wenigstens eine erfindungsgemäße Brennstoffzelle, dadurch gekennzeichnet, dass der Elektrolytbehälter innerhalb oder außerhalb der Toilette angeordnet ist.

Besonders bevorzugt ist dabei die Anode so angeordnet, dass das eine Ende der Anode von außerhalb der mobilen Toilette beispielsweise durch eine Serviceöffnung zugänglich ist. Dadurch kann die Anode im laufenden Betrieb einer mobilen Toilette ausgewechselt werden.

Weitere praktische Ausführungsformen und Vorteile der Erfindung sind nachfolgend im Zusammenhang mit den Zeichnungen beschrieben. Es zeigen:
- Fig. 1: zeigt einen Querschnitt durch die Brennstoffzelle
- Fig. 2: zeigt einen Querschnitt durch die Anode

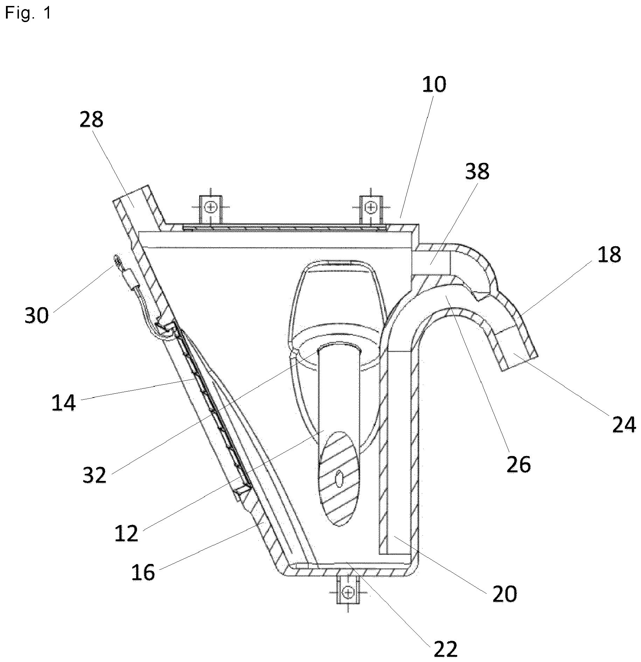

Fig. 1 zeigt die Brennstoffzelle 10 im Querschnitt. Durch den Zulauf 28 wird Elektrolyt wie beispielsweise Urin zugeführt. Dieser füllt dann den Elektrodenraum 16 soweit, dass die Anode 12, wie beispielsweise einem Magnesiumstab, und die Kathode 14, wie beispielsweise einer Teflon-Membrane mit einer porösen Graphitschicht, mit Elektrolyt kontaktiert sind. In der Kathode ist die Graphitschicht elektrisch über einen elektrischen Kontakt 30 kontaktiert. Knapp oberhalb des Bodens des Elektrolytbehälters 22 befindet sind die eine Öffnung des Rohres 18, nämlich der Abtransportvorrichtung 18. Das Rohr 18 ist als korrespondierende Röhre gestaltet, so dass der höchste Punkt des Rohres 26 oberhalb des anderen Endes des Rohres 24 liegt. Dieses andere Ende des Rohres 24 ist außerhalb des Elektrolytbehälters 16 angeordnet. So wird bei Zufluss von beispielsweise Urin als Elektrolyt das entstehende Metalloxid bzw. Metallhydroxid kontinuierlich durch das eine Ende des Rohres 20 durch das Rohr 18 als korrespondierende Röhre abtransportiert. Ein zweiter Ablauf 38 ist ein Notüberlauf, der zur Belüftung mit dem Rohr 18 verbunden ist, und eine spontane Komplettentleerung verhindern kann.

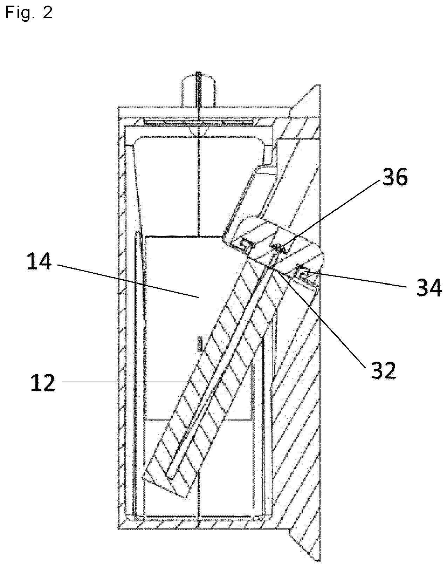

Fig. 2 zeigt einen Querschnitt der Anode 12. Diese ist in einer Öffnung 32 des Elektrolytbehälters 16 mit einem Verschluss 34 befestigt. Die Anode ist mit einem elektrischen Kontakt 36 kontaktiert. Der Anodenstab 12 ist so von außerhalb einer mobilen Toilette auswechselbar.

### Ausführungsbeispiel

Eine Luft-Magnesium-Primärzelle zur Spannungsversorgung von 10 LEDs (á 0,08 W) und zeitlich versetzt eines Lüfterrads (1,4 W) wurde gemäß der vorbeschriebenen Zeichnungen gebaut. Ein Magnesiumstab (Anode) mit 80 g Magnesium und eine 50 cm² große gas-permeable Kathode wurden eingesetzt. Das Gehäuse wurde additiv aus PLA (Polymilchsäure) gefertigt. Das Volumen des Gehäuses fasste 750 ml Flüssigkeit. Das Steigrohrvolumen betrug 17,5 ml, um auch bei kleinen Zuläufen (50-100 ml) einen hinreichenden Austrag des elektrochemischen Produkts (hier Magnesiumhydroxid)zu erzielen. Das Gehäuse war zweiteilig (rechte und linke Hälfte quer zum Elektrolytstrom). Die Gehäuseteile wurden über einen Klebefalz verbunden. Das Gehäuse war so konzipiert, dass es von innen an der Kunststoffwand einer Toiletten-Kabine befestigt werden konnte und die Magnesium-Anode, als einziges service-nötiges Bauteil, durch ein rechteckiges Fenster in der Außenwand von außerhalb der Kabine gewechselt werden konnte.

Eine elektronische Schaltung war so konzipiert, dass bei verriegelter Tür das Licht eingeschaltet und die Lüftung ausgeschaltet wurde. Bei offener (unverriegelter) Tür wurden die elektrischen Verbraucher umgekehrt betrieben (kein Licht, dafür Lüftung). Eine Nachlauffunktion stoppte den Lüfter nach einer angemessenen Zeit und verhinderte unnötigen Stromverbrauch.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Brennstoffzelle
- 12: Anode
- 14: Kathode
- 16: Elektrolytbehälter
- 18: Ablauf, Abtransportvorrichtung
- 20: ein Ende der Abtransportvorrichtung
- 22: Boden des Elektrolytbehälters
- 24: anderes Ende der Abtransportvorrichtung
- 26: höchster Punkt der Abtransportvorrichtung
- 28: Zulauf
- 30: elektrischer Kontakt Kathode
- 32: Öffnung im Elektrolytbehälter für die Anode
- 34: Verschluss der Anode
- 36: elektrischer Kontakt der Anode
- 38: Überlauf

## Patentansprüche

1. Metall-Luft-Brennstoffzelle (10) umfassend wenigstens eine Anode (12) und wenigstens eine Kathode (14), die jeweils mit Elektrolyt kontaktierbar sind, wobei in einem Elektrolytbehälter (16) eine Abtransportvorrichtung (18) für die entstehende Metalloxid- bzw. Metallhydroxid-Elektrolyt-Mischung angeordnet ist.

2. Metall-Luft-Brennstoffzelle (10) gemäß Anspruch 1, **dadurch gekennzeichnet, dass** die Abtransportvorrichtung (18) ein Rohr mit einem Zulauf und einem Ablauf ist, dessen eines Ende (20) als Zulauf 0,1 bis 10 cm oberhalb des Bodens (22) des Elektrolytbehälters (16) endet, insbesondere das Innenvolumen des im Inneren des Elektrolytbehälters befindlichen Teils des Rohrs (18) in einem Bereich von 10 bis 100 ml liegt.

3. Metall-Luft-Brennstoffzelle (1) gemäß Anspruch 2, **dadurch gekennzeichnet, dass** sich das andere offene Ende des Rohrs (24) zum einen außerhalb oder in der Wand des Elektrolytbehälters (16) und zum anderen unterhalb des höchsten Punktes des Rohrs (26) befindet.

4. Metall-Luft-Brennstoffzelle (10) gemäß einem der vorhergehenden Ansprüche, **dadurch gekennzeichnet, dass** das Metall der Anode (12) Magnesium oder Aluminium ist.

5. Metall-Luft-Brennstoffzelle (10) gemäß einem der vorhergehenden Ansprüche, **dadurch gekennzeichnet, dass** die Kathode (14) eine wasserundurchlässige und luftdurchlässige Membrane umfasst.

6. Metall-Luft-Brennstoffzelle (10) gemäß einem der vorhergehenden Ansprüche, **dadurch gekennzeichnet, dass** in der oberen Hälfte des Elektrolytbehälters (16) ein Zulauf (28) für Elektrolyt angeordnet ist.

7. Metall-Luft-Brennstoffzelle (10) gemäß einem der vorhergehenden Ansprüche, **dadurch gekennzeichnet, dass** in der unteren Hälfte des Elektrolytbehälters (16) ein Zulauf eines Ablaufs für Elektrolyt (18) angeordnet ist, der besonders bevorzugt die Abtransportvorrichtung (18) ist.

8. Verfahren zur Gewinnung von elektrischem Strom mit der Metall-Luft-Brennstoffzelle (1) gemäß einem der vorhergehenden Ansprüche, **dadurch gekennzeichnet, dass**
a. Elektrolyt kontinuierlich oder wiederholt mit Pausen in den Elektrolytbehälter (16) durch den Zulauf (28) eingefüllt wird, und
b. das entstehende Metalloxid bzw. Metallhydroxid kontinuierlich oder wiederholt mit Pausen abtransportiert wird.

9. Verfahren gemäß Anspruch 8, **dadurch gekennzeichnet, dass** der Elektrolyt Urin enthält oder ist.

10. Verfahren gemäß Anspruch 8 oder 9 zur Stromversorgung einer mobilen oder stationären Toiletteneinrichtung.

11. Toilette, insbesondere mobile Toilette, mobile oder stationäre Toiletteneinrichtung, umfassend wenigstens eine Brennstoffzelle (10) gemäß einem der Ansprüche 1 bis 7, **dadurch gekennzeichnet, dass** der Elektrolytbehälter (16) innerhalb oder außerhalb der Toilette angeordnet ist.
